# EUROPEAN PATENT SPECIFICATION

(11) **EP 4 409 205 B1**
(45) Date of publication and mention of the grant of the patent: **07.05.2025**
(21) Application number: 23707441.4
(22) Date of filing: 27.01.2023
(51) Int. Cl.: F24H 15/156, F24H 15/16, F24H 1/22

(54) **WATER HEATING SYSTEM**
WASSERHEIZUNGSANLAGE
SYSTÈME DE CHAUFFAGE D'EAU

(30) Priority: 27.01.2022 GB 202201082
(43) Date of publication of application: 07.08.2024
(73) Proprietor: Luthmore Ltd, Melksham SN12 7SJ (GB)
(72) Inventor: GUTKOWSKI, Martin Szymon, Melksham SN12 7SJ (GB)
(74) Representative: Keltie LLP
(86) International application number: PCT/GB2023/050193
(87) International publication number: WO 2023/144557

(56) References cited:
- WO-A1-2012/004985
- WO-A1-2019/231202
- CN-A- 110 440 334
- DE-A1- 102009 057 815
- DE-B4- 102009 025 596
- JP-B2- 6 344 015
- KR-A- 20180 127 262
- US-A- 4 363 221
- US-A1- 2019 123 405

## Description

### TECHNICAL FIELD

The present invention relates to a water heating system comprising an electrical heating device for heating water, a battery, and a battery management system electrically coupled to the battery for charging the battery. The present invention further relates to methods for controlling such water heating systems, and to computer program products allowing a computer to carry out such methods.

### BACKGROUND

Central heating boilers often use natural gas for heating water on demand when hot water is needed for domestic activities such as washing, bathing, cooking, or heating. The heat output of a domestic gas boiler is typically around 20-40 kW, which will usually be sufficient to meet the instantaneous hot water demand in a common household. To increase the available supply of hot water, it is possible to use a well-insulated hot water tank that is heated in times of low demand and used when hot water is consumed faster than it can be heated by the boiler.

A clear disadvantage of gas boilers is that they require a continuous supply of natural gas for which the necessary infrastructure needs to be present. Alternatively, space-occupying storage tanks can be used that will have to be replaced and/or refilled regularly. Furthermore, the burning of natural gas, which is a fossil fuel, leads to CO₂ emissions. In many countries, therefore, the use of gas boilers is being phased out and replaced by, e.g., heat pumps, solar thermal panels, and electric boilers which can be powered by renewable energy.

Electric boilers have the advantage of simple installation and connection. For example, an electric boiler can be connected to a supply of mains electricity very easily, such as via connection into a mains electricity socket, and can also be connected to the water supply in a simple manner. As such, electric boilers are a more practical gas boiler replacement than, for example, heat pumps or solar thermal panels. An important disadvantage of electric boilers, certainly when compared to gas boilers, is that their heating capacity is generally limited by the power available from the domestic mains electricity supply. A typical domestic electric boiler is not capable of delivering more than about 15 kW of heating power, compared to the 20-40 kW delivered by standard gas boilers. The energy required to heat water is a fundamental quantity, and temperature rise, flow rate and power are therefore fundamentally interrelated. As such, a typical domestic electric boiler cannot provide sufficient heating power to match the performance of standard gas boilers, i.e. cannot heat water flowing at a comparable flow rate to a comparable temperature. Instead, electric boilers typically supply hot water at a lower temperature because there is insufficient heating power available to heat all of the water, or at lower flow rate through the boiler such that the slower-flowing water can be heated to the desired temperature.

Other systems employ a hot water tank to achieve the desired water flow rate at the desired temperature. However, hot water tanks take up space that may not always be available and typically lead to efficiency losses because no insulation will keep the heated water in the tank at a constant temperature indefinitely. Furthermore, hot water coming from such water tanks can often not be delivered at the same high pressure as the water coming directly from the mains water supply. Furthermore, the time taken for a tank to heat leads to a lack of flexibility for the user.

In the German patent application published as DE 10 2009 030 999 A1, an electric water heater is disclosed wherein a battery powered heat pump warms water that is stored in a water tank. The water in the tank can be heated and the battery can be charged at times when electricity costs are lower, such as at night if special night tariffs apply, or during the day when electricity from solar panels may be available. The battery is cooled by a cooling jacket filled with a cooling fluid. This cooling jacket is used to control the temperature of the battery and to ensure that it can be charged and discharged with optimal efficiency. A heat exchanger is provided for exchanging heat between the water in the tank and the cooling fluid in the battery cooling jacket. This makes it possible to use heat produced in the battery during charging for warming up the water in the tank, which contributes to the overall energy efficiency of the water heater. While the electric water heater of D10 2009 030 999 A1 may alleviate some of the known problems with electrically heating water, it leaves many of the above-mentioned problems unsolved. Most importantly, the heat pump and the large water tank of this heating system result in a complex setup that requires a lot of space. A similar system is described in DE 10 2009 025596 B4, which also describes a large water tank in a system configured to manage the temperature of a separate battery by cycling water from the tank through a series of pipes to add or remove heat from the battery.

It is an aim of the present invention to address one or more disadvantages associated with the prior art.

### SUMMARY OF THE INVENTION

According to an aspect of the invention there is provided a water heating system comprising an electrical heating device for heating water, a battery, a battery management system, a heat sink arrangement, and a thermally insulating shell. The battery is electrically coupled to the electrical heating device for powering the electrical heating device. The battery management system is electrically coupled to the battery for charging the battery. The heat sink arrangement is thermally coupled to the battery and is configured to store and release thermal energy. The thermally insulating shell encloses the battery and the heat sink arrangement.

In contrast to the electric water heating systems known so far, the heat sink arrangement according to the invention is not limited to simply preventing overheating of the battery by withdrawing heat during the charging process. While known battery cooling arrangements try to withdraw all excess heat as efficiently as possible, the heat sink arrangement according to the invention absorbs and retains the generated heat, storing it for later use within the same thermally insulating shell that also encloses the battery. Advantageously, the heat sink arrangement according to the invention makes it possible to use the heat generated by the battery for supplying hot water on demand without requiring a separate water tank. Further, the heat sink arrangement reduces fluctuations in battery temperature, thereby reducing the risk of damaging the battery through excessive thermal cycling. The space-saving and energy-efficient characteristics of the electric water heating system described herein make it very suitable to be used for replacing existing heat-on-demand gas boilers or for installation in new buildings, as well as for use in other space-constrained applications.

The battery comprises means for storing electricity. In preferred examples the battery may comprise one or more cells. For example, the battery may comprise one or more chemical battery cells.

The battery management system is electrically coupled to the battery and is configured for charging the battery. As such, the battery management system may be referred to as a battery charger, or battery charging apparatus in some examples. In some examples the battery management system may be a separate modular unit provided within the insulating shell and electrically coupled to the battery. In other examples the battery management system may be integrated with the battery.

Preferably, the heat sink arrangement is additionally thermally coupled to the battery management system and the thermally insulating shell further encloses the battery management system. Like the battery, the battery management system may produce heat during the charging process. This heat can also be stored in the heat sink arrangement within the insulating shell for warming water later.

In preferred examples, the water heating system includes an alternating current (AC) to direct current (DC) power supply for the battery management system. The AC to DC power supply is configured to be electrically coupled to a source of AC power, such as mains AC power. The AC to DC power supply may be part of the battery management system in some examples, or alternatively the AC to DC power supply may be a separate component configured to supply power to the battery management system. In either example, the AC to DC power supply is configured to receive AC electricity, e.g. mains electricity, and convert the AC electricity to DC electricity for charging the battery. For example, mains electricity may be supplied to the battery for charging via the battery management system and/or the AC to DC power supply. As such, the AC to DC power supply is directly or indirectly electrically coupled to the battery. The AC to DC power supply may be configured to convert the AC mains electricity to DC electricity having a higher voltage than the RMS of the AC mains electricity, for example using a power factor correction (PFC) based power supply. More preferably still, the AC to DC power supply may be configured to convert the AC mains electricity to DC electricity having a higher voltage than the fully charged voltage of cells within the battery.

The AC to DC power supply for the battery management system is preferably thermally coupled to the heat sink arrangement. Most preferably, the AC to DC power supply for the battery management system is situated within the thermally insulating shell, e.g. the thermally insulating shell encloses the AC to DC power supply for the battery management system. As such, heat energy produced by the AC to DC power supply when charging the battery can be stored by the heat sink arrangement within the thermally insulating shell. Power electronics for other electrical devices within the insulating shell, such as pumps and/or fans for example, may also be situated within the thermally insulating shell and in use may also produce heat which can be stored in the heat sink arrangement within the insulating shell.

In preferred embodiments, the heat sink arrangement has a heat capacity that is sufficient to store all heat produced by charging the battery, without causing the battery damage through excessive thermal cycling. For example, heat may be produced by the battery management system, the AC to DC power supply for the battery management system, the battery itself and other electrical components within the insulating shell during battery charging, and this heat may be stored by the heat sink arrangement. Preferably, the heat capacity of the heat sink arrangement is greater than the total heat produced by charging the battery. For example, the heat capacity of the heat sink arrangement is preferably greater than the total heat produced by electrical components, such as the battery management system, the AC to DC power supply for the battery management system and the battery, when charging the battery.

The optimal maximum temperature of the battery and the amount of heat produced during charging are known or measurable quantities. The heat capacity requirements of the heat sink arrangement can therefore be calculated. The heat capacity of materials in the heat sink arrangement is also a known or measurable quantity. As such, the thermal requirements of the heat sink arrangement can be calculated, and the heat sink arrangement can be configured to ensure that the heat sink provides a large enough maximum heat storage capacity to avoid causing the battery damage through excessive thermal cycling.

It is noted that heat will be produced while discharging the battery too. However, discharging of the battery will occur during periods of demand for hot water. When there is a demand for hot water, the electrical heating device uses the electrical energy stored in the battery to heat the water. Any heat already stored in the heat sink arrangement, as well as any heat generated in the battery itself while discharging, can be used to preheat the water that goes to the electrical heating device.

The heat sink arrangement may comprise a heat exchanger configured to facilitate heat exchange between an interior of the insulating shell and water flowing to an inlet of the electrical heating device. As such, the temperature inside the insulating shell may be controlled by removing heat from the interior of the insulating shell via the heat exchanger.

The heat sink arrangement preferably comprises a heat sink volume for holding a heat exchange fluid. The heat sink volume may be configured for holding a heat exchange fluid that is either a liquid or a gas. In other words, the system may comprise a heat exchange fluid within the heat sink volume which may be a liquid or a gas. A heat exchange fluid may facilitate particularly effective removal of heat from the interior of the insulating shell. Further, a heat exchange fluid may facilitate flexibility in the way in which heat is removed from inside the insulated shell.

How the preheating of the water is achieved depends on whether the heat sink volume is an 'open system' or a 'closed system'.

In an open system, the heat sink volume may be fluidly coupled to an inlet of the electrical heating device. This allows the heat sink volume to be filled with the water to be heated which increases the heat capacity of the heat sink arrangement. This also allows the water to be routed through the heat sink arrangement before being led to the electrical heating device. As such, the water may be pre-heated before being delivered to the electrical heating device for further heating. In a closed system, water supplied to the electrical heating device and the heat sink volume are not fluidly coupled. Instead, the heat sink arrangement may comprise a heat exchanger for exchanging heat between the heat exchange fluid in the heat sink volume and water flowing to an inlet of the electrical heating device. In this way the water to be heated by the electrical heating device is still pre-heated by the heat exchanger. In a closed system, the heat exchange fluid may be water, air, or any other suitable fluid (i.e. liquid or gas).

A pump may be included in either an open system or a closed system to promote circulation of a fluid in the heat sink volume to ensure an even distribution of heat energy during charging and discharging of the battery. For example, in an open system a pump may be used to promote circulation of water through the heat sink volume. In a closed system, a pump may be provided for promoting circulation of the heat exchange fluid through the heat sink volume and to facilitate rejection of heat from the heat sink volume by further passing through the heat exchanger. It will be appreciated that in examples wherein the heat exchange fluid is a gas, the circulation pump may be a fan, for example.

Preferably, the water heating system further comprises a controller that is operationally coupled to the battery management system and/or the electrical heating device. The controller may control the charging process of the battery, for example to ensure that charging costs are minimised, or for example to ensure that the battery is fully charged at times of expected high demand of hot water.

A temperature sensor may be provided for measuring a temperature inside the thermally insulating shell.

In some examples, the controller may be operationally coupled to a device configured to initiate flow within the heat sink volume. Such a device may be a pump (or a fan in examples where the heat exchange fluid is a gas) or a release valve fluidly coupled to the heat sink volume, for example. The controller is preferably operationally coupled to the temperature sensor and the device and may be configured to selectively initiate flow within the heat sink volume to reject heat from the heat sink volume in dependence on the temperature inside the thermally insulating shell. The initiated flow may, for example, be a flow of heat exchange fluid out of the heat sink volume, or may be a circulation of the heat exchange fluid within the heat sink volume to promote heat exchange between the heat exchange fluid and water flowing to an inlet of the electrical heating device. In either example the flow within the heat sink volume ultimately results in the rejection of heat from the heat sink volume.

The system may further include a release valve fluidly coupled to the heat sink volume and configured to facilitate the release of heat exchange fluid from the heat sink volume. The controller which is operationally coupled to the temperature sensor and the release valve is configured to open the release valve in dependence on the temperature inside the thermally insulating shell.

In some examples, the release valve fluidly coupled to the heat sink volume may also be fluidly coupled to an inlet of the electrical heating device and configured to allow drainage of water from the heat sink volume into the inlet of the electrical heating device. When the temperature inside the thermally insulating shell rises above the optimal maximum temperature of the battery at a moment when there is no direct demand for warm water at an outlet, heat may be released by rejecting the pre-heated water into, e.g., a drain or a fluid-based room heating system such as a water-based room heating system.

In some examples, a fluid-based room heating system, such as a central heating system, may function as an additional heat sink. For example, even without actively flowing water through the central heating system, if the water within the central heating system is in fluid communication, and therefore also thermally coupled to, the heat sink volume within the insulating shell, then heat from the battery can also be conducted to the water in the central heating system. As such, opening the release valve to facilitate fluid communication between the central heating system and the heat sink volume may increase the heat capacity available for storing heat emitted by the battery and other electrical components within the shell.

In some examples, the controller may be operationally coupled to the temperature sensor and the pump configured to circulate the heat exchange fluid within the heat sink volume. The controller may therefore be configured to operate the pump in dependence on the temperature inside the thermally insulating shell. For example, if the temperature within the insulating shell rises above a set threshold, the controller may operate the pump to circulate the heat exchange fluid within the heat sink volume to promote heat exchange from the fluid to the water to be heated, via the heat exchanger in a closed system.

In some examples the controller may be operationally coupled to the temperature sensor, a pump and a release valve. The controller may operate both the pump and the release valve to motivate heat exchange fluid, in either liquid or gaseous form, out of the heat sink volume to reject heat from the heat sink volume.

In some examples, a refrigerant loop of a heat pump may be arranged within the insulating shell, or may be thermally coupled to the inside of the insulated shell. As such, heat emitted from the battery and other components within the shell may be rejected to the heat pump refrigerant loop.

In some embodiments, the water heating system may further comprise a secondary heating device. The secondary heating device is preferably configured to be powered by mains electricity. The secondary heating device may therefore be referred to as a secondary electrical heating device. Optionally, the secondary heating device may comprise a heat pump arrangement.

In some examples, the water heating system may be configured such that water to be heated by the secondary heating device is pre-heated by heat from inside the thermally insulating shell. In an open system the heat sink volume may therefore be fluidly coupled to an inlet of the secondary heating device. In a closed system, a heat exchanger may be configured to exchange heat between the heat exchange fluid in the heat sink volume and water flowing to an inlet of the secondary heating device.

In examples including an electrical heating device and a secondary heating device, there is a possibility to use either the (primary) electrical heating device, the secondary heating device, or both, depending on the circumstances. When the two heating devices are connected in series, the selection of which heating device to use may, for example, depend on the temperature increase that is desired, or the relative costs of operating one or the other. In some examples, the primary electrical heating device and the secondary heating device may be provided on parallel fluid flow paths. When the (primary) electrical heating device and the secondary heating device are provided on parallel fluid flow paths, using both simultaneously will allow for a higher throughput, i.e. a higher hot water flow rate, and therefore higher water pressure at the outlet for the given flow rate. Selecting which of the two to use may thus also depend on the demand for hot water.

A controllable valve arrangement may be provided for controlling the fluid flow rate in each of the parallel fluid flow paths. For example, the controllable valve arrangement may comprise a first valve to control fluid flow rate in the fluid flow path comprising the (primary) electrical heating device, and a second valve to control the fluid flow rate in the second fluid flow path comprising the secondary heating device. Preferably, the first valve may be arranged downstream of the heat sink volume. This ensures that the heat sink volume may remain filled with water even with the first valve closed to halt fluid flow in the first fluid flow path. As previously described, the water in the heat sink volume adds to the heat capacity within the insulating shell. In some examples, the first valve may act as the previously-described release valve configured to be operated to control the temperature within the insulating shell. Preferably, the second valve may be arranged downstream of the secondary heating device.

Providing the (primary) electrical heating device and secondary heating device on separate, parallel fluid flow paths advantageously minimises the resistance effect experienced by the water to be heated. For example, the primary and secondary heating devices each provide a resistance to water flow. By arranging the heating devices on parallel fluid flow paths, the resistance provided by a given heating device is only encountered when that heating device is in use, i.e. when water is flowed through that fluid flow path. Such an arrangement provides an advantage over a system comprising heating devices arranged in series wherein water flows through, and is resisted by, multiple heating devices even if such heating devices are not actively heating the water.

Optionally, the heat sink arrangement includes a phase change material. Phase change materials are very suitable for storing large amounts of thermal energy in a relatively small volume and can do so while limiting the temperature fluctuations inside the thermally insulating shell. For example, the heat sink arrangement may comprise a sodium sulphate or paraffin-based phase change material.

In an exemplary embodiment, the battery comprises multiple modules, i.e. battery modules, each containing one or more individual cells. The modules are preferably formed of a material having a high thermal conductivity, such as aluminium, to efficiently transfer heat energy from the cells to the rest of the heat sink arrangement. The heat sink arrangement may comprise a frame with multiple compartments or fixings, each compartment or fixing arranged for holding one or more of the battery modules, all of which adds to the heat capacity of the heat sink as a whole within the insulating shell.

The heat sink volume may comprise heat exchange fluid channels that pass between respective battery modules. In some examples, the heat exchange fluid channels may pass through respective battery modules. With such a modular setup, the size and heating capacity of the system can easily be adapted to the needs and circumstances. It further allows for easy replacement of individual modules in the event of technical failure and makes it more practical to route the fluid channels of the heat sink volume through the battery structure and to make a large surface area available for heat transfer.

In some examples, one or more heat exchange fluid channels may be defined by conduits in the frame. For example, such conduits may be formed as an integral part of the frame. As such, the frame may perform multiple functions, including holding the battery modules, routing the heat exchange fluid around the battery modules, and conducting heat between the battery modules and the heat exchange fluid, all whilst itself also adding to the total heat capacity of the heat sink arrangement within the insulating shell. The frame may also comprise one or more compartments configured to retain a phase change material. In some examples, individual modules may comprise one or more compartments configured to retain a phase change material.

Housing the battery within the thermally insulating shell adds to the heat capacity within the insulating shell, such that the structure of the battery itself adds to the heat capacity to help store the heat rejected by the cells during charging, even when the heat exchange fluid is not flowing within the heat sink volume. In such an instance, in contrast to examples in the prior art, the cells are not necessarily actively cooled. Instead, the heat sink arrangement within the insulating shell is configured to provide a sufficient heat capacity to ensure that the cells do not overheat or become damaged by excessive thermal cycling as a result of the predictable amount of thermal energy emitted during charging. Including the frame within the insulating shell adds further heat capacity within the insulating shell.

Providing the heat sink arrangement thermally coupled to the battery within the insulating shell helps to reduce fluctuations in the battery temperature. Reducing temperature fluctuations increases the longevity of the cells. In preferred examples, the temperature within the insulating shell may be maintained at between 0°C and 85°C, more preferably between 20°C and 40°C. To provide active control of the temperature within the insulating shell, the controller may operate the release valve and/or circulation pump and/or control charging of the battery as previously described.

The battery modules, i.e. cells, may be actively cooled by circulating or flowing heat exchange fluid through the heat sink volume. Such motivation of the heat exchange fluid may be achieved using a pump in an open system or a closed system as previously described. In some examples, the battery modules may be actively cooled by flowing water to be heated by the electrical heating device through the heat sink volume, e.g. in an open system. For example, heat may be discharged from inside the insulating shell, and the battery modules may therefore be actively cooled, when hot water is demanded, for example by turning on a tap or other outlet downstream of the heat sink volume.

The water heating system may further comprise a battery heating device that is enclosed in the thermally insulating shell. This battery heating device can be used to ensure that the battery temperature remains within an optimal range for high energy efficiency and low battery wear. In some examples, the system may comprise a return conduit configured to pipe heated water from downstream of the primary and/or secondary heating devices back into the heat sink volume within the insulating shell to warm the battery. The return conduit may comprise a controllable valve such that the temperature within the insulating shell, and therefore the temperature of the battery, can be actively managed by opening and closing the valve.

The water heating system comprises an outer casing. The thermally insulating shell which encloses the battery and the heat sink arrangement, is housed within the outer casing. Further, the battery management system may be housed within the same outer casing. In even more preferred examples, the outer casing may further house the previously-described heat exchanger. Most preferably, the outer casing may additionally house at least one of an electrical heating device and a secondary heating device. Optionally a controllable valve arrangement may also be situated within the outer casing.

According to other aspects of the invention, control methods are provided for controlling the above-described water heating system. For example, a control method may be used for controlling the fluid flow rate in each available parallel fluid flow path in dependence on at least one of a current demand for heated water, a charging status of the battery, a temperature inside the thermally insulating shell, and a current price of mains electricity. Other control methods may control charging of the battery in dependence on at least one of, a charging status of the battery, a temperature inside the thermally insulating shell, a predicted cost of charging the battery, a current price of mains electricity, and a predicted demand for heated water.

### BRIEF DESCRIPTION OF THE DRAWINGS

Embodiments of the invention will now be described by way of example with reference to the accompanying drawings, in which:
Figure 1 schematically shows a water heating system according to an embodiment of the invention;
Figure 2 schematically shows a battery of the water heating system enclosed in a thermally insulating shell;
Figure 3 shows a schematic representation of an inlet and an outlet of a heat sink volume of a water heating system with an open heat transfer configuration;
Figure 4 shows a schematic representation of a heat exchanger arranged to transfer heat energy between the heat sink volume and the water supply in a system having a closed loop heat sink volume;
Figure 5 shows a perspective view of a battery frame with battery modules and a heat sink arrangement suitable for use in the water heating system of claim 1;
Figure 6 shows a close-up view of a portion of the battery frame of Figure 5; and
Figure 7 shows a cross section of a battery frame suitable for use in the water heating system of claim 1.

### DETAILED DESCRIPTION

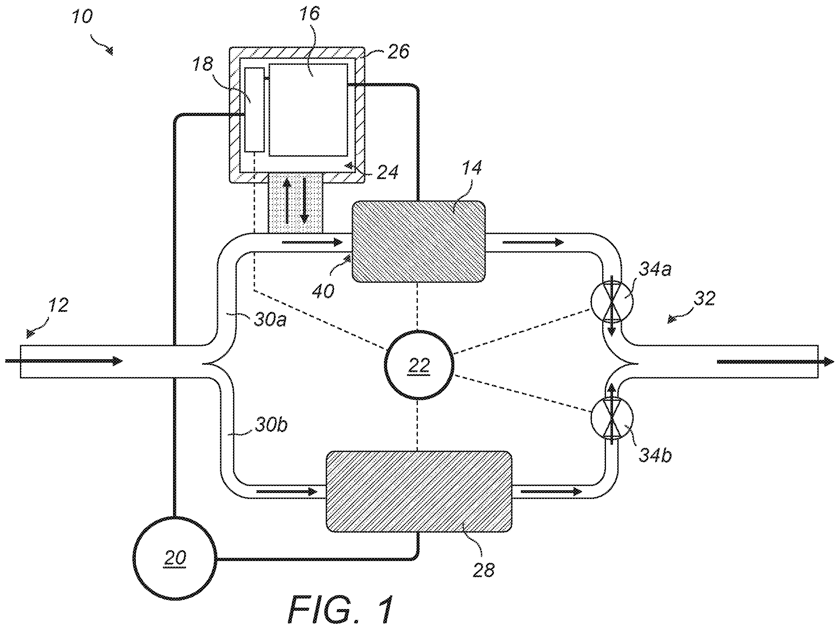

Figure 1 shows a schematic diagram of a water heating system 10 in accordance with an example of the invention. The water heating system 10 comprises a water inlet 12 configured to receive water from a water supply, such as a mains water supply or a water tank (not shown). The system 10 also includes an electrical heating device 14 for heating the water that enters the system 10 via the water inlet 12. The electrical heating device 14 may be an electrical resistive heating element for example. The electrical heating device 14 is electrically coupled to a battery 16 such that the battery 16 can power the electrical heating device 14.

In preferred examples the electrical heating device 14 may be powered by direct current (DC) power supplied by the battery 16. In other examples, the electrical heating device 14 may be an alternating current (AC) heating device 14, and the system 10 may further include a DC to AC converter (not shown) through which direct current power from the battery 16 may be converted to alternating current power for powering the heating device 14.

As shown in Figure 1, the water heating system 10 further includes a battery management system 18 electrically coupled to the battery 16 to enable charging of the battery 16, i.e. the battery management system 18 is configured to charge the battery 16. The battery management system 18 is preferably connected to the mains electricity 20 to receive electrical power for charging the battery 16. Whilst not shown in the figures, in some examples, the water heating system 10 may also include an AC to DC power supply for the battery management system 18, which is configured to receive AC electricity from the mains supply 20, and convert this to DC electricity for charging the battery 16.

As shown schematically in Figure 1, the system 10 also includes a controller 22 that is operationally coupled to the battery management system 18 to control charging of the battery 16. For example, the controller 22 may control charging of the battery 16 in dependence on at least one of, a charging status of the battery 16, a predicted cost of charging the battery 16, a current price of mains electricity, and a predicted demand for heated water. As such, the controller 22 may control the timing of charging the battery 16. In some examples, the controller 22 may be configured to receive a user input to directly command charging the battery 16. In some examples the controller 22 is also coupled to the electrical heating device 14 to control operation of the heating device 14 in use.

In some examples, the heating device 14 may be electrically coupled to the mains electricity 20 such that the heating device 14 may be powered by the mains electricity 20 in addition to power provided by the battery 16. In such examples, the system 10 may further comprise an AC to DC converter (not shown) such as a rectifier to rectify the AC mains electricity 20 to provide DC power to the heating device 14. Whilst not shown in the accompanying figures, in some examples the system 10 may therefore include a heating device 14 powered by both the battery 16 and the mains electricity 20. In such an example the heating device 14 may be powered primarily by the battery 16, with supplementary power provided by the mains electricity 20. Alternatively, the heating device 14 may be powered primarily by the mains electricity 20, and the battery 16 may provide supplementary power to achieve a heating performance comparable to that of a conventional gas boiler.

Notably, the water heating system 10 includes a heat sink arrangement 24 that is specifically configured to store heat emitted from the battery 16 and other electrical components, and which therefore helps to regulate the temperature of the battery 16. As such, the heat sink arrangement 24 is thermally coupled to the battery 16 to facilitate the transfer of heat energy from the battery 16 to the heat sink arrangement 24. In preferred examples, the heat sink arrangement 24 is also thermally coupled to the battery management system 18 to receive heat from the battery management system 18. Similarly, in examples wherein the water heating system 10 includes an AC to DC power supply for the battery management system 18, such an AC to DC power supply is preferably also thermally coupled to the heat sink arrangement 24 such that the heat sink arrangement 24 may receive and store heat energy emitted by the AC to DC power supply during charging of the battery 16.

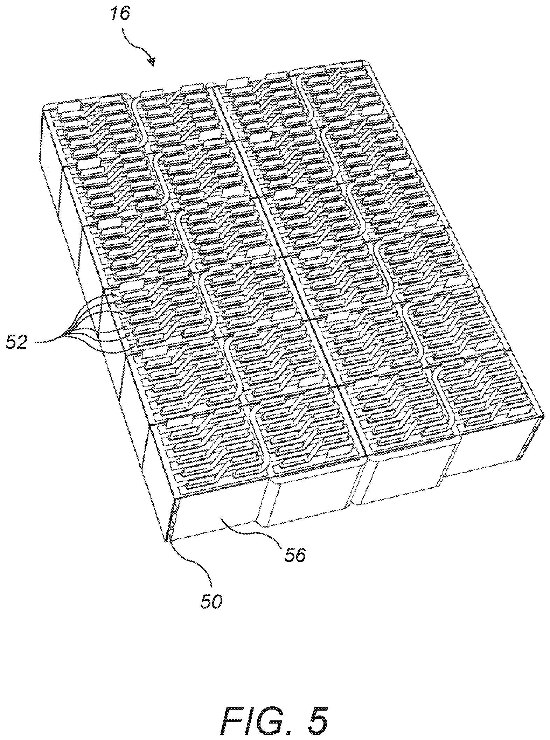

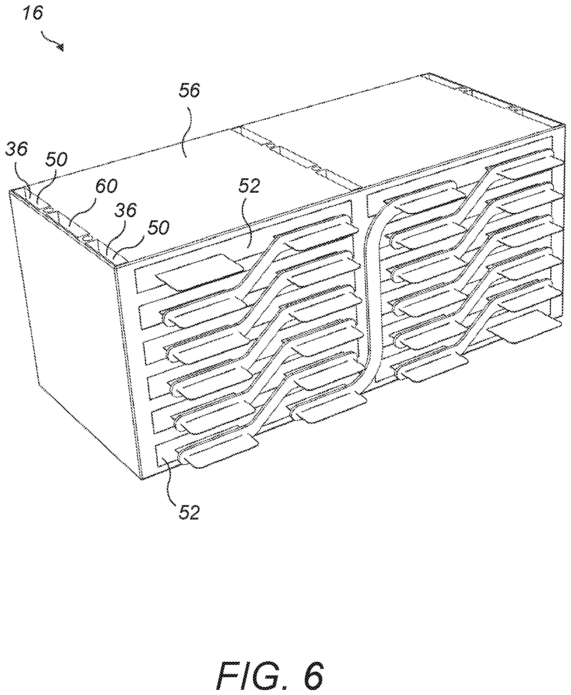

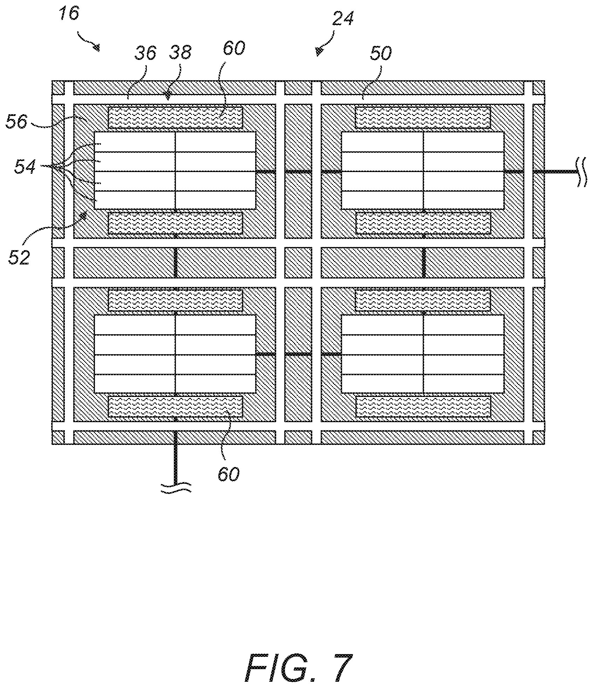

The heat sink arrangement 24 will be described in more detail later with reference to Figures 5, 6 and particularly the cross-sectional view of Figure 7. However, by way of an initial overview, the heat sink arrangement 24 is configured with a heat capacity that is sufficient to store all of the heat produced by charging the battery 16 without causing the battery 16 damage through excessive thermal cycling.

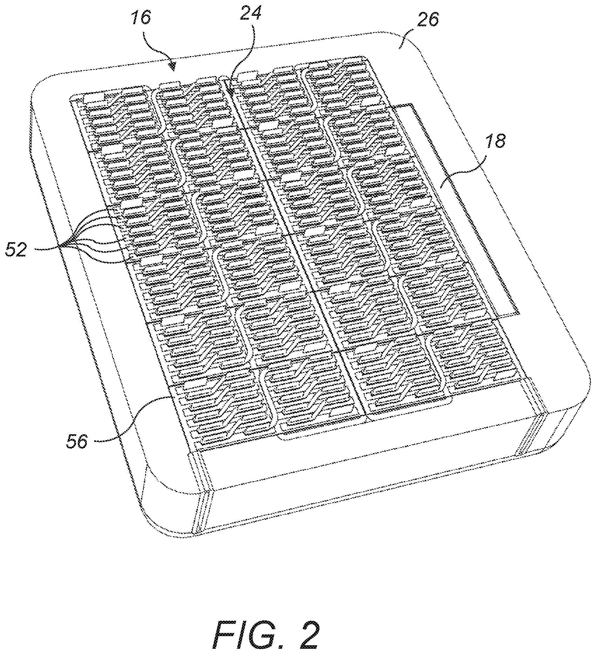

Referring still to Figure 1, but with reference additionally to Figure 2, the battery 16 and the heat sink arrangement 24 of the water heating system 10 are enclosed in a thermally insulating shell 26. In preferred examples the thermally insulating shell 26 also encloses the battery management system 18 as shown in Figure 2. In examples including an AC to DC power supply for the battery management system 18, such a power supply is preferably also enclosed within the thermally insulating shell 26. The thermally insulating shell 26 ensures that heat produced by the battery 16 and other electrical components within the shell, and which is transferred to the heat sink arrangement 24, is retained in the heat sink arrangement 24, i.e. not wasted or immediately rejected.

The water heating system 10 therefore advantageously facilitates effective use of the heat produced by the battery 16 to improve the overall efficiency and longevity of the water heating system 10 as will be described later in more detail. In particular, retaining the heat produced by the battery 16 enables pre-heating water before such water is delivered to the electrical heating device 14 as shown schematically in Figure 1. Retaining the heat may also help to maintain the temperature of the battery 16 within an optimum operating range. Maximising the performance of the insulating shell 26, i.e. increasing the thermal resistance of the shell 26, increases the efficiency of the water heating system 10 by minimising the heat lost as a result of charging and discharging the battery 16. In some examples the insulating shell 26 is therefore configured to retain 70%, preferably at least 80%, or more preferably at least 90%, of the heat energy generated by charging and discharging the battery 16, in the heat sink arrangement 24 within the shell 26. For example the thermal performance of the shell 26 may be comparable to that of an insulated hot water tank.

In preferred examples, the water heating system 10 additionally includes a secondary heating device 28 as shown in the schematic diagram of Figure 1. The secondary heating device 28 is preferably configured to be powered by mains electricity 20, and may for example comprise an electrical resistive heating element. The inclusion of a secondary heating device 28 facilitates an increased total heating power output, such that the heating power of the electrical water heating system 10 may be comparable to the heating power of a typical gas-powered boiler when both of the heating devices 14, 28, powered respectively by the battery 16 and mains 20, are used to heat water.

As shown in Figure 1, in particularly preferred examples, the electrical heating device 14 and the secondary heating device 28 are provided on parallel fluid flow paths 30a, 30b. For example, the electrical heating device 14 may be arranged on a first fluid flow path 30a, and the secondary heating device 28 may be arranged on a second fluid flow path 30b. The water heating system 10 may include a controllable valve arrangement 32 for controlling a fluid flow rate in each of the parallel fluid flow paths 30a, 30b. For example, the system 10 may comprise a first controllable valve 34a arranged on the first fluid flow path 30a, and a second controllable valve 34b arranged on the second fluid flow path 30b.

The controller 22 is preferably operationally coupled to the controllable valve arrangement 32. By opening and closing the first and second controllable valves 34a, 34b it is therefore possible to control the proportion of the water from the water inlet 12 that flows through each heating device 14, 28. The fluid flow rate in each of the parallel fluid flow paths 30a, 30b may be controlled in dependence on at least one of a current demand for heated water, a charging status of the battery 16, a temperature inside the thermally insulating shell 26, and a current price of mains electricity 20.

Referring still to Figures 1 and 2, but as most clearly shown in Figure 7, the heat sink arrangement 24 preferably comprises a heat sink volume 36 for holding a heat exchange fluid 38. Heat produced by the battery 16 and the battery management system 18 is transferred to the heat exchange fluid 38 in the heat sink volume 36. Providing a heat exchange fluid 38 in the heat sink volume 36 increases the heat capacity within the insulating shell 26. Accordingly, heat energy emitted from the battery 16, battery management system 18, and other electrical components within the shell, may be stored in the heat exchange fluid 38 within the insulating shell 26. The heat exchange fluid 38 helps to enable control of the temperature within the insulating shell 26, and facilitates a plurality of options for removing heat from inside the insulating shell 26 as will be described in more detail later.

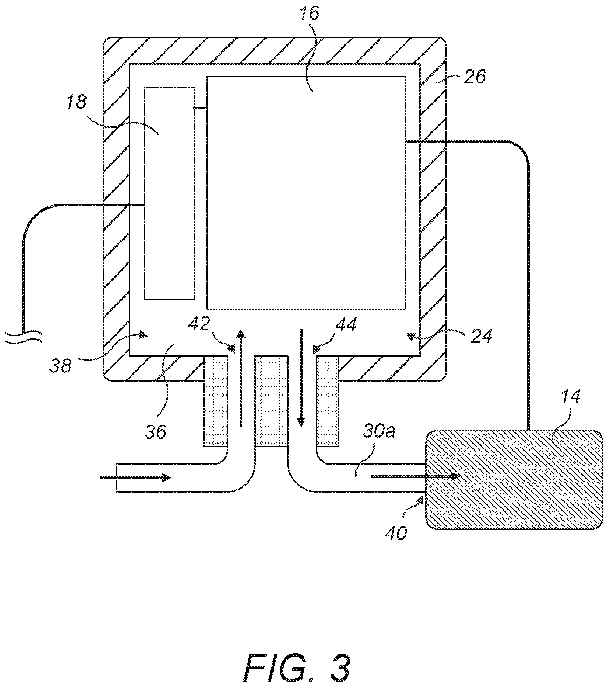

Referring additionally to Figure 3, but with continued reference to Figure 1, in some examples the water heating system 10 may be configured as an open system. In an open system configuration, the heat sink volume 36 is fluidly coupled to an inlet 40 of the electrical heating device 14. In other words, the heat sink volume 36 is in fluid communication with the inlet 40 of the electrical heating device 14 such that fluid 38 from the heat sink volume 36 is delivered to the electrical heating device 14 for subsequent additional heating. Preferably, in an open system the heat exchange fluid 38 in the heat sink volume 36 may therefore be water that is introduced to the water heating system 10 via the main water inlet 12.

In an open system the water flows from the water inlet 12, through the heat sink volume 36 and is then delivered to the electrical heating device 14, for example via the first fluid flow path 30a. In such a configuration, water is pre-heated by the heat emitted from the battery 16, battery management system 18 and other electrical components housed in the insulating shell 26 before being heated further by the electrical heating device 14. Such a configuration provides an energy efficient water heating system 10 because surplus heat is transferred directly from the battery 16, battery management system 18, and other electrical components such as an AC to DC power supply, to the water to be heated. As such, energy input into the water heating system 10 is used either directly or indirectly for heating water, and is therefore not wasted.

An inlet 42 and an outlet 44 of the heat sink volume 36 in an open system are shown schematically in Figure 3. In this example, all of the water conveyed via the first fluid flow path 30a flows through the heat sink volume 36 first, before arriving at the electrical heating device 14. However, in some other examples the system 10 may be configured such that a portion of the water flowing in the first fluid flow path 30a is diverted to flow through the heat sink volume 36, whilst the remaining water in the first fluid flow path 30a bypasses the heat sink volume 36 and is delivered directly to the electrical heating device 14.

In some examples the water heating system 10 may comprise a release valve (not shown) fluidly coupled to the heat sink volume 36. In some examples the release valve may be configured to allow drainage of heat exchange fluid 38, such as water, from the heat sink volume 36. For example water may be released into the first fluid flow path 30a. Whilst not shown in Figure 3, the system 10 may also include a temperature sensor configured to measure the temperature inside the thermally insulating shell 26. The controller 22 is preferably operationally coupled to the temperature sensor and the release valve so that the release valve may be operated in dependence on the temperature inside the thermally insulating shell 26. In some examples, the previously-described first controllable valve 34a may perform the same function as the release valve, i.e. the first controllable valve 34a may be opened or closed dependent on the temperature within the thermally insulating shell 26. The valve 34a may be operated independently from the electrical heating device 14, i.e. the valve 34a may be operated regardless of whether the electrical heating device 14 is operating to heat the water. As such, in some examples, the temperature inside the insulating shell 26 may be controlled by allowing or blocking the flow of water through the heat sink volume 36 by opening or closing the controllable valve 34a to allow or block the rejection of heat from the heat sink volume 36.

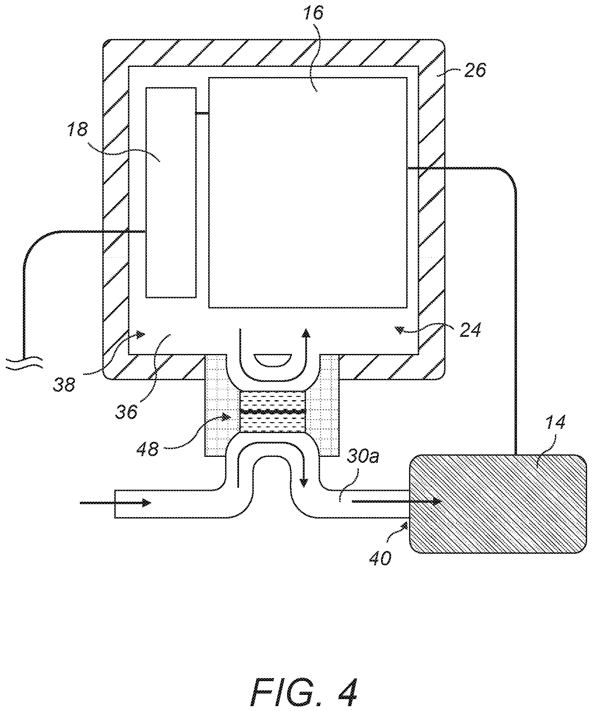

A closed system is configured such that heat is removed from the interior of the insulating shell 26 via a heat exchanger 48. Figure 4 shows an example of a portion of a closed system at an interface between the heat sink volume 36 and a fluid flow path 30a. This configuration may be described as a closed system because the heat sink volume 36 is not in fluid communication with the first or second fluid flow path 30a, 30b. The heat exchanger 48 facilitates a transfer of heat energy from inside the insulating shell 26 to water flowing to an inlet 40 of the electrical heating device 14. The heat exchanger 48 is therefore preferably arranged upstream of the electrical heating device 14. As such, water delivered to the electrical heating device 14 may be pre-heated by the heat exchanger 48 using heat from within the insulating shell 26.

In a closed system, a separate heat exchange fluid 38 is circulated within the heat sink volume 36 to receive heat energy emitted by the battery 16. The heat exchanger 48 is preferably configured to transfer heat from the heat exchange fluid 38 to water flowing to an inlet 40 of the electrical heating device 14. In some examples the heat exchange fluid 38 in the heat sink volume 36 of a closed system may be water. However, a closed system also facilitates the use of other heat exchange fluids 38, because in such a system, the heat exchange fluid 38 is not fluidly coupled to an outlet at which heated water is delivered to a consumer. Therefore, the heat exchange fluid 38 does not need to be safe for human consumption, and may include advantageous additives, such as an anti-corrosion agent for example.

The heat sink volume 36 may be a complex configuration comprising a plurality of heat exchange fluid channels 50 (as shown in Figures 6 an d 7 for example). It may therefore be advantageous to configure the heat sink volume 36 as a closed system to allow close control of the fluid 38 within the heat sink volume 36. For example, mains water may comprise different natural minerals that could leave deposits, such as limescale, on surfaces over which such water flows over time. A closed system heat sink volume 36 means that specific chemical agents can be introduced into the heat sink volume 36 to ensure that heat exchange fluid channels 50 do not become damaged, restricted or blocked by such deposits. Finally, in some examples, water flowed over and around the battery 16 and other materials within the insulating shell 26 may not be suitable or safe for human consumption, and providing the heat sink volume 36 as a closed system therefore avoids any potential contamination of the water supplied to a consumer at an outlet.

A closed system may include a pump (not shown) for circulating the heat exchange fluid 38 through the heat sink volume 36. A closed system may also include a temperature sensor (not shown) inside the thermally insulating shell 26. The controller 22 may be operationally coupled to the temperature sensor and the pump, and the controller 22 may operate the circulation pump in dependence on the temperature inside the insulating shell 26 to promote rejection of heat from the heat exchange fluid 38 to the incoming cold water flow in a fluid flow path 30a, 30b via the heat exchanger 48.

In other examples, a closed system may additionally include a release valve (not shown). The release valve may be fluidly coupled to the heat sink volume 36. The controller 22 may be operationally coupled to such a release valve such that the release valve may be operated in dependence on the temperature inside the insulating shell 26. For example, a gaseous heat exchange fluid 38, such as air, in the heat sink volume 36 may be released directly into the environment outside the insulating shell 26 to manage the temperature inside the insulating shell 26. Alternatively, a liquid heat exchange fluid 38 may be released from the heat sink volume 36 via the release valve into a drain, for example, to control the temperature within the insulating shell 26.

In some examples of a closed system, the release valve may be fluidly coupled to a fluid-based heating system, such as a water-based central heating system, such that, through operation of the release valve, heat may be rejected from the heat sink volume 36 to the fluid in the heating system. Such rejection of heat may be facilitated simply by fluidly and thermally coupling the heat sink volume 36 with the heating system by opening the release valve, without necessarily requiring the heating system to be actively flowing heat exchange fluid 38 through the heat sink volume 36. Providing fluid communication between the heat sink volume 36 and a water-based heating system may increase the heat capacity available for storing heat emitted by the battery 16.

Whilst not shown in the accompanying figures, in some examples the system 10 may also include a battery heating device that is enclosed in the thermally insulating shell 26. The battery heating device may be operationally coupled to the controller 22 such that the controller 22 can, when required, increase the temperature within the insulating shell 26 by operating the battery heating device to ensure that the temperature of the battery 16 remains within an optimum operating range.

The battery 16 and other components of the water heating system 10 arranged within the thermally insulating shell 26 will now be described in more detail with reference to the remaining figures. The following description is equally applicable to the open system and the closed system that have been described previously. For ease of reference, the fluid 38 in the heat sink volume 36 is referred to herein as a heat exchange fluid 38 because heat is transferred, i.e. exchanged, from the battery 16 to the heat exchange fluid 38. It will be appreciated that in an open system the heat exchange fluid 38 is the water to be heated using the heating device 14, and in a closed system the heat exchange fluid 38 is a separate fluid to the water that is to be heated using the heating device 14.

With reference to Figures 5, 6 and 7, the battery 16 preferably comprises multiple battery modules 52. For example the battery modules 52 may each include one or more battery cells 54, such as chemical battery cells 54 for example. The battery modules 52 may be electrically connected to one another in series to provide a high current to the electrical heating device 14. Alternatively, the battery modules 52 may be electrically connected to one another in parallel such that high voltage power is provided to the electrical heating device 14. In some other examples the electrical connections between the battery modules 52 may be selectively reconfigurable to facilitate active control of the current and voltage provided to the electrical heating device 14.

The heat sink arrangement 24 includes a frame 56 that has multiple compartments or fixings which are arranged for holding one or more of the battery modules 52. It will be appreciated that, being part of the battery structure, the frame 56 is also housed inside the insulating shell 26 (as shown in Figure 2 for example). Therefore, the frame 56 provides additional heat capacity for storing heat energy emitted by the battery 16 and other electrical components within the shell 26. In some examples, and as shown most clearly in Figure 7, the heat sink arrangement 24 within the insulating shell 26 may include a phase change material 60, and the phase change material 60 may be contained by the frame 56.

With reference again more particularly to the cross-sectional view of an example in Figure 7, the heat sink volume 36 comprises heat exchange fluid channels 50 that pass between or through respective battery modules 52. This configuration provides the heat sink volume 36 with a high surface area via which heat can be transferred to the heat exchange fluid 38. For reference, heat exchange fluid channels 50 of the heat sink volume 36 are also shown in the examples in Figures 5 and 6.

The advantages of the electric water heating system 10 of the present invention will now be described by way of a numerical example. However, it should be noted that the numerical values used by way of example are provided as an example only and are not intended to limit the scope of the invention defined in the appended claims.

For the purpose of demonstration, the following example assumes a charge efficiency of 90% and a battery capacity of 10 kWh. To charge the battery 16, the battery 16, i.e. the battery cells 54, and battery management system 18 combined will reject (10/0.9)-10 = 1.11 kWh of heat energy. This is heat energy which, unless stored, would go to waste.

In this example each cell 54 has a mass of 0.65 kg, a nominal voltage of 3.2 V, a capacity of 30 Ah, and provides an energy storage of 96 Wh. The specific heat capacity of such a cell 54 depends on the cell's precise construction however, it would typically be in the region of 0.8-1.7 kJ/kgK. For the purpose of this example, each cell 54 has a specific heat capacity of 1 kJ/kgK.

A battery 16 having a capacity 10 kWh may be formed of one hundred and four of the previously defined cells 54 (10 kWh / 96 Wh = ~104 cells). Therefore the heat capacity of the cells 54 in this battery 16 in this example is 104 x 1 kJ/kgK x 0.65 kg = 67.6 kJ/K. 67.6 kJ of heat energy are therefore required to heat all the cells 54 by 1K (= 1°C). 1.11 kWh of heat energy is emitted by the battery 16 and battery management system 18 which is approximately 4 MJ, and 4 MJ / 67.6kJ provides a temperature increase of 59°C.

Whilst the battery temperature increase may technically be within the specified range for the cells 54, thermal cycling in this range over a period of many years is likely to degrade battery health and/or performance. As previously described, the water heating system 10 of the present invention therefore additionally includes a heat sink arrangement 24 within the insulating shell 26 to increase the heat capacity within the shell 26. The heat sink arrangement 24 within the insulating shell 26 includes the frame 56 for storing or mounting the battery modules 52 to hold them in position. For the purpose of this example, the frame 56 may be made from cast aluminium.

A numerical example will now be described to demonstrate the thermal performance of the heat sink arrangement 24 within the insulating shell 26. For the purpose of the example, the frame 56 is configured to hold twelve of the previously-described cells 54 (for example, see Figure 6). It will be appreciated that any calculation can be conducted with an arbitrary number of cells as long as respective numbers are observed. In doing so, temperature change can be directly compared.

Proceeding with the example shown in Figure 6, twelve cells 54 have a combined heat capacity of 12 x 1 kJ/kgK x 0.65kg = 7.8 kJ/K. The twelve cells 54 used in this example have a storage capacity of 12 x 96 Wh = 1.152 kWh. The heat energy emitted during charging at 90% efficiency is = (1.152/0.9) - 1.512 = 0.128 kWh which is = 460.8 kJ. The temperature increase experienced by the cells as a result of the heat emitted during charging, without use of a heat sink 24 within the shell 26, would therefore be 460.8 kJ / 7.8 kJ/K = 59°C in this example.

However, as previously described, providing a heat sink arrangement 24 within the thermally insulating shell advantageously reduces the temperature fluctuations experienced by the cells 54 of the battery 16. The frame 56 inside the insulating shell 26 is part of the heat sink 24 in this example. For the purpose of this example, the frame 56 may be assumed to have a mass of 2.5 kg, and the specific heat capacity of aluminium is 0.96 kJ/kgK. The heat capacity of the frame 56 may therefore be calculated as 2.5 kg x 0.96 kJ/kgK = 2.4 kJ/K. It follows that the total heat capacity of the frame 56 and the cells 54 within the insulating shell 26 in this example is 7.8 kJ/K + 2.4 kJ/K = 10.2kJ/K.

As previously described, the twelve cells 54 in this example have a storage capacity of 1.152 kWh, and the heat energy emitted during charging at 90% efficiency is 460.8 kJ. The total temperature increase within the insulating shell 26 as a result of charging can therefore be calculated as 460.8 kJ / 10.2 kJ/K = 45°C. Providing a heat sink arrangement 24 that includes the frame 56 therefore reduces the temperature increase experienced by the cells 54 within the insulating shell 26 during charging.

The heat capacity within the shell 26 is further increased by including heat exchange fluid 38 in the heat sink volume 36 within the insulating shell 26. For the purpose of this example the heat exchange fluid 38 is water. The heat sink volume 36, i.e. including the heat exchange fluid channels 50, may have a volume of 0.466 litres in this example. The heat exchange fluid 38 (water) in the heat sink volume 36 therefore has a mass of 0.466 kg, and the specific heat capacity of water is 4.2 kJ/kgK. Accordingly, the heat exchange fluid 38 in the heat sink volume 36 provides an additional heat capacity of 1.957 kJ/K (from 4.2 kJ/kgK x 0.466 kg = 1.957 kJ/K).

The total heat capacity within the insulating shell 26, including the cells 54, the frame 56 and the heat exchange fluid 38, is therefore 7.8 kJ/K + 2.4 kJ/K + 1.96 kJ/K = 12.16 kJ/K. The total heat emitted during charging at 90% efficiency is 460.8kJ. The total temperature increase experienced by the cells 54 within the insulating shell 26 is therefore 460.8kJ / 12.16 kJ/K = 37.9°C increase in temperature. Evidently, the heat exchange fluid 38 within the heat sink volume 36 therefore further reduces the temperature increase.

As previously described, in some examples the water heating system 10 may additionally include a phase change material 60, such as sodium sulphate, within the insulating shell 26. For the purpose of this example the phase change material 60 is sodium sulphate which has a melting point of 32.4°C and a heat of fusion of 252 kJ/kg. Accordingly, 252kJ of energy are required to melt 1kg of sodium sulphate, and this will occur at 32.4°C.

In preferred examples, the water heating system 10 is configured such that the melting point of the phase change material 60 is within the range of temperatures experienced inside the insulating shell 26 when charging and discharging the battery 16. As such, the change in temperature will pause for the duration of time taken to melt (or freeze) a given volume of the phase change material 60.

Referring again to the present example, three of the nine heat exchange fluid channels 50 in the frame 56 shown by way of example in Figure 6 may be filled with sodium sulphate 60. That is to say the sodium sulphate, i.e. phase change material 60, may be housed in the heat sink arrangement 24 in a compartment provided by the frame 56.

The energy required to melt this volume of phase change material 60 can be subtracted from the energy available to increase the temperature (or added to the energy rejected when cooling). In this example the heat exchange fluid channels 50 filled with heat exchange fluid 38 now have a volume of 0.311 litres, and the system 10 therefore comprises water with a mass of 0.311 kg in the heat sink volume 36. The specific heat capacity of water is 4.2 kJ/kgK so the heat capacity added by including the heat exchange fluid 38 within the insulating shell 26 is 4.2 x 0.311 = 1.306 kJ/K. In this example, having reduced the amount of heat exchange fluid 38, the total heat capacity within the insulating shell 26 is therefore 7.8 kJ/K + 2.4 kJ/K + 1.31 kJ/K = 11.51kJ/K.

However, the mass of sodium sulphate 60 contained within the three channels is 0.414 kg, and the energy required to melt this mass of sodium sulphate is = 0.414 kg x 252 kJ/kg = 93 kJ. The heat emitted during changing at 90% efficiency 460.8 kJ. Removing the heat absorbed by melting the phase change material 60 leaves 460.8 kJ - 93 kJ = 367.8 kJ. The total increase in temperature experienced by the cells 54 in a system 10 including phase change material 60 within the insulating shell 26 in this example is 367.8 kJ / 11.51 kJ/K = 32.0°C. The above calculation does not take the specific heat capacity of solid and liquid sodium sulphate into account, and in reality the temperature increase is in fact even less severe. In summary, the inclusion of phase change material 60 within the shell 26 therefore further reduces the increase in temperature experienced by the cells 54 which increases their longevity as previously described.

The invention described herein and defined in the appended claims advantageously stores heat emitted by the battery 16 during charging and utilises it to enable more efficient water heating and increase battery longevity. Increasing the efficiency of a system typically results in an increase in materials and manufacturing costs. However, the water heating system 10 of the present invention facilitates an increased system efficiency without increasing cost. For example, less efficient cells 54 with higher internal resistance resulting in a greater heat output can be used because the emitted heat is recaptured in the heat sink arrangement 24 for later use. Use of such cells 54 is likely to carry a cost advantage. Similarly the electronics in the battery management system 18 can be deliberately designed to be less optimal, and therefore cheaper, because the heat energy emitted is captured and stored for later use.

Further, it will be appreciated that the above description and accompanying figures are provided merely as an example. Many alternatives to the specific examples provided above are therefore possible without departing from the scope of the invention as defined in the appended claims.

## Claims

1. A water heating system (10) comprising:
- an outer casing,
- an electrical heating device (14) for heating water,
- a battery (16) electrically coupled to the electrical heating device for powering the electrical heating device,
- a battery management system (18) electrically coupled to the battery for charging the battery,
- a heat sink arrangement (24) thermally coupled to the battery and configured to store and release thermal energy, and
- a thermally insulating shell (26) housed within the outer casing, **characterized in that** the thermally insulating shell encloses the battery and the heat sink arrangement.

2. A water heating system (10) according to claim 1, wherein the heat sink arrangement (24) has a heat capacity that is sufficient to store all heat produced by charging the battery (16), without causing the battery damage through excessive thermal cycling.

3. A water heating system (10) according to claim 1 or 2, wherein the heat sink arrangement (24) is thermally coupled to the battery management system (18), and wherein the thermally insulating shell (26) further encloses the battery management system.

4. A water heating system (10) according to any preceding claim, wherein the heat sink arrangement (24) comprises a heat exchanger (48) configured to facilitate heat exchange between an interior of the insulating shell (26) and water flowing to an inlet (40) of the electrical heating device (14).

5. A water heating system (10) according to any preceding claim, wherein the heat sink arrangement (24) comprises a heat sink volume (36) for holding a heat exchange fluid (38).

6. A water heating system (10) according to claim 5, wherein the heat sink volume (36) is fluidly coupled to an inlet (40) of the electrical heating device (14).

7. A water heating system (10) according to claim 5 or 6, wherein the heat sink arrangement (24) comprises a heat exchanger (48) for exchanging heat between a heat exchange fluid (38) in the heat sink volume (36) and water flowing to an inlet (40) of the electrical heating device (14).

8. A water heating system (10) according to claim 7, further comprising a pump for circulating the heat exchange fluid (38) through the heat sink volume (36).

9. A water heating system (10) according to any of claims 5 to 8, further comprising a controller (22) operationally coupled to the battery management system (18) and/or the electrical heating device (14), and a temperature sensor for measuring a temperature inside the thermally insulating shell (26), wherein the controller is operationally coupled to a device configured to initiate flow within the heat sink volume (36), such as a pump or a release valve fluidly coupled to the heat sink volume, the controller being operationally coupled to the temperature sensor and the device and configured to selectively initiate flow within the heat sink volume to reject heat from the heat sink volume in dependence on the temperature inside the thermally insulating shell.

10. A water heating system (10) according to claim 9, further comprising a release valve fluidly coupled to the heat sink volume and configured to facilitate the release of heat exchange fluid (38) from the heat sink volume (36), the controller (22) being operationally coupled to the temperature sensor and the release valve and configured to open the release valve in dependence on the temperature inside the thermally insulating shell (26).

11. A water heating system (10) according to claim 10, wherein the release valve is additionally fluidly coupled to an inlet (40) of the electrical heating device (14) and configured to allow drainage of water from the heat sink volume (36) into the inlet of the electrical heating device.

12. A water heating system (10) according to claim 9 and comprising a pump for circulating the heat exchange fluid (38) through the heat sink volume (36), the controller (22) being operationally coupled to the temperature sensor and the pump and configured to operate the pump in dependence on the temperature inside the thermally insulating shell (26).

13. A water heating system (10) according to any preceding claim, further comprising a secondary heating device (28) configured to be powered by mains electricity.

14. A water heating system (10) according to claim 13, wherein the electrical heating device (14) and the secondary heating device (28) are provided on parallel fluid flow paths (30a, 30b), the water heating system further comprising a controllable valve arrangement (32) for controlling a fluid flow rate in each of the parallel fluid flow paths.

15. A water heating system (10) according to any preceding claim, wherein the heat sink arrangement (24) includes a phase change material (60).

16. A water heating system (10) according to any preceding claim, wherein the battery (16) comprises multiple modules (52) each containing one or more individual cells (54), and wherein the heat sink arrangement (24) comprises a frame (56) with multiple compartments (58) or fixings, each compartment or fixing arranged for holding one or more of the battery modules.

17. A water heating system (10) according to claim 16, wherein the heat sink arrangement (24) comprises a heat sink volume (36) for holding a heat exchange fluid (38), and wherein the heat sink volume comprises heat exchange fluid channels (50) that pass between and/or through respective battery modules (52).

18. A water heating system (10) according to any preceding claim, further comprising a battery heating device that is enclosed in the thermally insulating shell (26).

19. A water heating system (10) according to any preceding claim, further comprising an AC to DC power supply inside the insulating shell (26), the power supply being electrically coupled to at least one of the battery (16) and/or battery management system (18) to supply power to the battery, and the power supply being thermally coupled to the heat sink arrangement (24).

## Patentansprüche

1. Wasserheizungssystem (10), das Folgendes umfasst:
- ein Außengehäuse,
- eine elektrische Heizungsvorrichtung (14) zum Erhitzen von Wasser,
- eine Batterie (16), die mit der elektrischen Heizungsvorrichtung zum Stromversorgen der elektrischen Heizungsvorrichtung elektrisch gekoppelt ist,
- ein Batteriemanagementsystem (18), das mit der Batterie zum Laden der Batterie elektrisch gekoppelt ist,
- eine Wärmesenkenanordnung (24), die mit der Batterie thermisch gekoppelt ist und dazu konfiguriert ist, thermische Energie zu speichern und freizugeben, und
- einen thermisch isolierenden Mantel (26), der innerhalb des Außengehäuses untergebracht ist, **dadurch gekennzeichnet, dass** der thermisch isolierende Mantel die Batterie und die Wärmesenkenanordnung einschließt.

2. Wasserheizungssystem (10) gemäß Anspruch 1, wobei die Wärmesenkenanordnung (24) eine Wärmekapazität aufweist, die ausreicht, um sämtliche Wärme, die durch das Laden der Batterie (16) produziert wird, zu speichern, ohne an der Batterie einen Schaden durch übermäßiges thermisches Wechselbeanspruchen zu verursachen.

3. Wasserheizungssystem (10) gemäß Anspruch 1 oder 2, wobei die Wärmesenkenanordnung (24) mit dem Batteriemanagementsystem (18) thermisch gekoppelt ist und wobei der thermisch isolierende Mantel (26) ferner das Batteriemanagementsystem einschließt.

4. Wasserheizungssystem (10) gemäß einem vorhergehenden Anspruch, wobei die Wärmesenkenanordnung (24) einen Wärmetauscher (48) umfasst, der dazu konfiguriert ist, einen Wärmetausch zwischen einem Inneren des isolierenden Mantels (26) und Wasser, das zu einem Einlass (40) der elektrischen Heizungsvorrichtung (14) fließt, zu erleichtern.

5. Wasserheizungssystem (10) gemäß einem vorhergehenden Anspruch, wobei die Wärmesenkenanordnung (24) ein Wärmesenkenvolumen (36) zum Halten eines Wärmetauschfluids (38) umfasst.

6. Wasserheizungssystem (10) gemäß Anspruch 5, wobei das Wärmesenkenvolumen (36) mit einem Einlass (40) der elektrischen Heizungsvorrichtung (14) fluidisch gekoppelt ist.

7. Wasserheizungssystem (10) gemäß Anspruch 5 oder 6, wobei die Wärmesenkenanordnung (24) einen Wärmetauscher (48) zum Tauschen von Wärme zwischen einem Wärmetauschfluid (38) in dem Wärmesenkenvolumen (36) und Wasser, das zu einem Einlass (40) der elektrischen Heizungsvorrichtung (14) fließt, umfasst.

8. Wasserheizungssystem (10) gemäß Anspruch 7, das ferner eine Pumpe zum Zirkulieren des Wärmetauschfluids (38) durch das Wärmesenkenvolumen (36) umfasst.

9. Wasserheizungssystem (10) gemäß einem der Ansprüche 5 bis 8, das ferner Folgendes umfasst: eine Steuereinheit (22), die mit dem Batteriemanagementsystem (18) und/oder der elektrischen Heizungsvorrichtung (14) betriebsmäßig gekoppelt ist, und einen Temperatursensor zum Messen einer Temperatur in dem thermisch isolierenden Mantel (26), wobei die Steuereinheit mit einer Vorrichtung betriebsmäßig gekoppelt ist, die dazu konfiguriert ist, einen Fluss innerhalb des Wärmesenkenvolumens (36) zu initiieren, wie etwa eine Pumpe oder ein Freigabeventil, die/das mit dem Wärmesenkenvolumen fluidisch gekoppelt ist, wobei die Steuereinheit mit dem Temperatursensor und der Vorrichtung betriebsmäßig gekoppelt ist und dazu konfiguriert ist, einen Fluss innerhalb des Wärmesenkenvolumens selektiv zu initiieren, um Wärme von dem Wärmesenkenvolumen in Abhängigkeit von der Temperatur in dem thermisch isolierenden Mantel abzuweisen.

10. Wasserheizungssystem (10) gemäß Anspruch 9, das ferner ein Freigabeventil umfasst, das mit dem Wärmesenkenvolumen fluidisch gekoppelt ist und dazu konfiguriert ist, die Freigabe von Wärmetauschfluid (38) von dem Wärmesenkenvolumen (36) zu erleichtern, wobei die Steuereinheit (22) mit dem Temperatursensor und dem Freigabeventil betriebsmäßig gekoppelt ist und dazu konfiguriert ist, das Freigabeventil in Abhängigkeit von der Temperatur in dem thermisch isolierenden Mantel (26) zu öffnen.

11. Wasserheizungssystem (10) gemäß Anspruch 10, wobei das Freigabeventil zusätzlich mit einem Einlass (40) der elektrischen Heizungsvorrichtung (14) fluidisch gekoppelt ist und dazu konfiguriert ist, eine Ableitung von Wasser von dem Wärmesenkenvolumen (36) in den Einlass der elektrischen Heizungsvorrichtung zu erlauben.

12. Wasserheizungssystem (10) gemäß Anspruch 9 und umfassend eine Pumpe zum Zirkulieren des Wärmetauschfluids (38) durch das Wärmesenkenvolumen (36), wobei die Steuereinheit (22) mit dem Temperatursensor und der Pumpe betriebsmäßig gekoppelt ist und dazu konfiguriert ist, die Pumpe in Abhängigkeit von der Temperatur in dem thermisch isolierenden Mantel (26) zu betreiben.

13. Wasserheizungssystem (10) gemäß einem vorhergehenden Anspruch, das ferner eine sekundäre Heizungsvorrichtung (28) umfasst, die dazu konfiguriert ist, mit Netzelektrizität versorgt zu werden.

14. Wasserheizungssystem (10) gemäß Anspruch 13, wobei die elektrische Heizungsvorrichtung (14) und die sekundäre Heizungsvorrichtung (28) auf parallelen Fluidflusspfaden (30a, 30b) bereitgestellt sind, wobei das Wasserheizungssystem ferner eine steuerbare Ventilanordnung (32) zum Steuern einer Fluidflussrate in jedem der parallelen Fluidflusspfade umfasst.

15. Wasserheizungssystem (10) gemäß einem vorhergehenden Anspruch, wobei die Wärmesenkenanordnung (24) ein Phasenwechselmaterial (60) beinhaltet.

16. Wasserheizungssystem (10) gemäß einem vorhergehenden Anspruch, wobei die Batterie (16) mehrere Module (52) umfasst, die jeweils eine oder mehrere individuelle Zellen (54) enthalten, und wobei die Wärmesenkenanordnung (24) einen Rahmen (56) mit mehreren Kammern (58) oder Fixierungen umfasst, wobei jede Kammer oder Fixierung zum Halten eines oder mehrerer der Batteriemodule angeordnet ist.

17. Wasserheizungssystem (10) gemäß Anspruch 16, wobei die Wärmesenkenanordnung (24) ein Wärmesenkenvolumen (36) zum Halten eines Wärmetauschfluids (38) umfasst und wobei das Wärmesenkenvolumen Wärmetauschfluidkanäle (50) umfasst, die zwischen und/oder durch jeweilige Batteriemodule (52) verlaufen.

18. Wasserheizungssystem (10) gemäß einem vorhergehenden Anspruch, das ferner eine Batterieheizungsvorrichtung umfasst, die in dem thermisch isolierenden Mantel (26) eingeschlossen ist.

19. Wasserheizungssystem (10) gemäß einem vorhergehenden Anspruch, das ferner eine AC-zu-DC-Stromversorgung in dem isolierenden Mantel (26) umfasst, wobei die Stromversorgung mit mindestens einem von der Batterie (16) und/oder dem Batteriemanagementsystem (18) elektrisch gekoppelt ist, um die Batterie mit Strom zu versorgen, und die Stromversorgung mit der Wärmesenkenanordnung (24) thermisch gekoppelt ist.

## Revendications

1. Système de chauffage d'eau (10) comprenant :
- un carter extérieur,
- un dispositif de chauffage électrique (14) destiné à chauffer l'eau,
- une batterie (16) reliée électriquement au dispositif de chauffage électrique pour alimenter le dispositif de chauffage électrique,
- un système de gestion de batterie (18) relié électriquement à la batterie pour charger la batterie,
- une structure de dissipateur thermique (24) reliée thermiquement à la batterie et conçue pour emmagasiner et libérer de l'énergie thermique, et
- une enveloppe thermiquement isolante (26) logée à l'intérieur du carter extérieur, **caractérisé en ce que** l'enveloppe thermiquement isolante renferme la batterie et la structure de dissipateur thermique.

2. Système de chauffage d'eau (10) selon la revendication 1, dans lequel la structure de dissipateur thermique (24) présente une capacité thermique qui est suffisante pour emmagasiner la totalité de la chaleur produite par la recharge de la batterie (16), sans provoquer d'endommagement de la batterie du fait d'un cyclage thermique excessif.

3. Système de chauffage d'eau (10) selon la revendication 1 ou 2, dans lequel la structure de dissipateur thermique (24) est reliée thermiquement au système de gestion de batterie (18), et dans lequel l'enveloppe thermiquement isolante (26) renferme, en outre, le système de gestion de batterie.

4. Système de chauffage d'eau (10) selon l'une quelconque des revendications précédentes, dans lequel la structure de dissipateur thermique (24) comprend un échangeur thermique (48) conçu pour faciliter un échange thermique entre un intérieur de l'enveloppe isolante (26) et l'eau s'écoulant vers une entrée (40) du dispositif de chauffage électrique (14).

5. Système de chauffage d'eau (10) selon l'une quelconque des revendications précédentes, dans lequel la structure de dissipateur thermique (24) comprend un volume de dissipateur thermique (36) destiné à contenir un fluide d'échange thermique (38).

6. Système de chauffage d'eau (10) selon la revendication 5, dans lequel le volume de dissipateur thermique (36) est relié fluidiquement à une entrée (40) du dispositif de chauffage électrique (14).

7. Système de chauffage d'eau (10) selon la revendication 5 ou 6, dans lequel la structure de dissipateur thermique (24) comprend un échangeur thermique (48) destiné à réaliser un échange thermique entre un fluide d'échange thermique (38) dans le volume de dissipateur thermique (36) et l'eau s'écoulant vers une entrée (40) du dispositif de chauffage électrique (14).

8. Système de chauffage d'eau (10) selon la revendication 7, comprenant, en outre, une pompe destinée à faire circuler le fluide d'échange thermique (38) à travers le volume de dissipateur thermique (36).

9. Système de chauffage d'eau (10) selon l'une quelconque des revendications 5 à 8, comprenant, en outre, un dispositif de commande (22) relié fonctionnellement au système de gestion de batterie (18) et/ou au dispositif de chauffage électrique (14), et un capteur de température destiné à mesurer une température à l'intérieur de l'enveloppe thermiquement isolante (26), dans lequel le dispositif de commande est relié fonctionnellement à un dispositif conçu pour établir un écoulement à l'intérieur du volume de dissipateur thermique (36), tel qu'une pompe ou une vanne de purge reliée fluidiquement au volume de dissipateur thermique, le dispositif de commande étant relié fonctionnellement au capteur de température et au dispositif et conçu pour établir de manière sélective un écoulement à l'intérieur du volume de dissipateur thermique afin de rejeter de la chaleur hors du volume de dissipateur thermique en fonction de la température à l'intérieur de l'enveloppe thermiquement isolante.

10. Système de chauffage d'eau (10) selon la revendication 9, comprenant, en outre, une vanne de purge reliée fluidiquement au volume de dissipateur thermique et conçue pour faciliter la purge de fluide d'échange thermique (38) depuis le volume de dissipateur thermique (36), le dispositif de commande (22) étant relié fonctionnellement au capteur de température et à la vanne de purge et conçu pour ouvrir la vanne de purge en fonction de la température à l'intérieur de l'enveloppe thermiquement isolante (26).

11. Système de chauffage d'eau (10) selon la revendication 10, dans lequel la vanne de purge est également reliée fluidiquement à une entrée (40) du dispositif de chauffage électrique (14) et conçue pour permettre l'écoulement d'eau depuis le volume de dissipateur thermique (36) dans l'entrée du dispositif de chauffage électrique.

12. Système de chauffage d'eau (10) selon la revendication 9 et comprenant une pompe destinée à faire circuler le fluide d'échange thermique (38) à travers le volume de dissipateur thermique (36), le dispositif de commande (22) étant relié fonctionnellement au capteur de température et à la pompe et conçu pour actionner la pompe en fonction de la température à l'intérieur de l'enveloppe thermiquement isolante (26).

13. Système de chauffage d'eau (10) selon l'une quelconque des revendications précédentes, comprenant, en outre, un dispositif de chauffage secondaire (28) conçu pour être alimenté par le réseau électrique.

14. Système de chauffage d'eau (10) selon la revendication 13, dans lequel le dispositif de chauffage électrique (14) et le dispositif de chauffage secondaire (28) sont placés sur des voies d'écoulement de fluide parallèles (30a, 30b), le système de chauffage d'eau comprenant, en outre, une structure de vannes commandable (32) destinée à réguler un débit de fluide dans chacune des voies d'écoulement de fluide parallèles.

15. Système de chauffage d'eau (10) selon l'une quelconque des revendications précédentes, dans lequel la structure de dissipateur thermique (24) comprend un matériau à changement de phase (60).

16. Système de chauffage d'eau (10) selon l'une quelconque des revendications précédentes, dans lequel la batterie (16) comprend de multiples modules (52) contenant chacun un ou plusieurs éléments individuels (54), et dans lequel la structure de dissipateur thermique (24) comprend un cadre (56) comportant de multiples compartiments (58) ou supports, chaque compartiment ou support étant conçu pour recevoir un ou plusieurs des modules de batterie.

17. Système de chauffage d'eau (10) selon la revendication 16, dans lequel la structure de dissipateur thermique (24) comprend un volume de dissipateur thermique (36) destiné à contenir un fluide d'échange thermique (38), et dans lequel le volume de dissipateur thermique comprend des conduits à fluide d'échange thermique (50) qui passent entre et/ou à travers des modules de batterie (52) respectifs.

18. Système de chauffage d'eau (10) selon l'une quelconque des revendications précédentes, comprenant, en outre, un dispositif de chauffage de batterie situé à l'intérieur de l'enveloppe thermiquement isolante (26).

19. Système de chauffage d'eau (10) selon l'une quelconque des revendications précédentes, comprenant, en outre, un bloc d'alimentation c.a. - c.c. à l'intérieur de l'enveloppe isolante (26), le bloc d'alimentation étant relié électriquement à la batterie (16) et/ou au système de gestion de batterie (18) pour alimenter la batterie, et le bloc d'alimentation étant relié thermiquement à la structure de dissipateur thermique (24).
